# EUROPÄISCHE PATENTSCHRIFT

(11) **EP 1 514 702 B1**
(45) Veröffentlichungstag und Bekanntmachung des Hinweises auf die Patenterteilung: **08.08.2007**
(21) Anmeldenummer: 03020391.3
(22) Anmeldetag: 10.09.2003
(51) Int. Cl.: B60C 17/04, B60C 17/06, B21D 53/18

(54) **Fahrzeugrad mit einem Notlaufstützkörper**
Vehicle wheel with a run flat support body
Roue de véhicule comportant un corps d'appui pour roulage à plat

(43) Veröffentlichungstag der Anmeldung: 16.03.2005
(73) Patentinhaber: Continental Aktiengesellschaft, 30165 Hannover (DE)
(72) Erfinder: Menz, Rüdiger, Dr., 31171 Hannover (DE)

(56) Entgegenhaltungen:
- EP-A- 0 508 541
- DE-A- 4 207 781
- DE-C- 637 158
- DE-C- 10 208 613
- US-A- 4 106 543

## Beschreibung

Die Erfindung betrifft ein Fahrzeugrad mit einem auf einer Radfelge befestigten Luftreifen und einem Notlaufstützkörper, der als schalenförmiger Ringkörper ausgebildet ist und sich mit seinen beiden axial äußeren Randbereichen über ringförmige Stützelemente auf der Radfelge abstützt.

Ein wesentlicher Nachteil von schlauchlosen Luftreifen ist das mögliche Auftreten einer Undichtigkeit, wodurch der Luftdruck im Reifen abfällt und der Reifen kollabiert. Bei einer hohen Fahrzeuggeschwindigkeit kann das plötzliche Entweichen der Luft im Reifen zu gefährlichen Situationen führen, in denen der Fahrer die Kontrolle über sein Fahrzeug verliert. Ferner kann der Reifen bei einem Druckverlust dadurch beschädigt werden, dass die Fahrzeugfelge sich in die Innenseele und darüber liegende Lagen einschneidet.

Für Luftreifen sind verschiedene Notlaufstützkörper-Systeme bekannt.
Die DE 197 07 090 A1 offenbart ein Fahrzeugrad mit einem innerhalb des Luftreifenhohlraumes auf der Felge abgestützten Notlaufstützkörper, der aus einem schalenförmigen Ringkörper gebildet wird. Der Notlaufstützkörper wird über ein oder mehrere Stützelemente auf der Felge abgestützt. Die Stützelemente gehen dabei in den schalenförmigen Ringkörper über und sind entweder ein Teil desselben oder bestehen aus einem im Vergleich zum schalenförmigen Ringkörper anderen Werkstoff.

In der DE 198 25 311 C1 ist ein anderes Notlaufstützkörpersystem offenbart, bei dem ein schalenförmiger Ringkörper innerhalb des Luftreifenhohlraumes angeordnet ist. Die beiden axial äußeren Randbereiche des Notlaufstützkörpers stützen sich über zwei elastische ringförmige Stützelemente auf der Felge ab. Die Stützelemente besitzen in radialer sowie axialer Richtung unterschiedliche Elastizitätskennwerte und sind mit dem metallischen Notlaufstützkörper stoffschlüssig verbunden. Der Notlaufstützkörper ist ferner als geschlitzter Ringkörper mit einem in axialer Richtung verlaufenden Öffnungsschlitz ausgebildet, wodurch die Montage auf die Felge ermöglicht wird. Der Notlaufstützkörper wird im Bereich des Öffnungsschlitzes auseinandergezogen und anschließend in den Reifenhohlraum hineingedreht. Der Öffnungsschlitz wird danach über einen oder mehrere Flansche verbunden.

Ein Nachteil der Notlaufstützkörper besteht darin, dass das Befüllen eines Reifens mit einem Notlaufstützkörper eine relativ lange Zeit in Anspruch nimmt, da die Druckluft vom Hohlraum des Notlaufstützkörpers in den Hohlraum zwischen Notlaufstützkörper und Reifeninnenseite gelangen muss. Dabei ist zu berücksichtigen, dass der Notlaufstützkörper im Pannenfall eine hohe Last aufzunehmen hat und die Festigkeit des Notlaufstützkörpers nicht herabgesetzt werden darf.

Der Erfindung liegt die Aufgabe zu Grunde, einen Notlaufstützkörper für einen Luftreifen zu schaffen, der ein schnelles Befüllen des Luftreifens mit Druckluft ermöglicht und gleichzeitig nicht wesentlich die Festigkeitseigenschaften des Notlaufstützkörpers beeinträchtigt.

Gelöst wird die Aufgabe gemäß den kennzeichnenden Merkmalen des Anspruchs 1.

Ein Vorteil ist insbesondere darin zu sehen, dass der Notlaufstützkörper ein schnelles Befüllen des Luftreifens mit Druckluft ermöglicht und gleichzeitig die Festigkeitseigenschaften des Notlaufstützkörpers im Wesentlichen beibehalten werden. Die Öffnungen in Form von Ellipsen können die auftretenden Beanspruchungen im Pannenfall optimal aufnehmen und verleihen dem Notlaufstützkörper dadurch eine hohe Dauerfestigkeit.

In einer vorteilhaften Weiterbildung der Erfindung ist vorgesehen, dass die Hauptachsen der Öffnungen in Form einer Ellipse im Wesentlichen in Umfangsrichtung des Notlaufstützkörpers ausgerichtet sind. Bei der Herstellung des Ringkörpers treten die größten Dehnungen in Umfangsrichtung des Ringkörpers auf. Die Ausrichtung der Hauptachse der Ellipse in Umfangsrichtung des Ringkörpers ergibt beim Umformprozeß eine optimale Spannungsverteilung in der Lochleibung.

In einer weiteren vorteilhaften Weiterbildung der Erfindung ist vorgesehen, dass die Öffnungen in Form einer Ellipse im innenliegenden Breitenbereich des Ringkörpers angeordnet sind. Bei der Herstellung des Ringkörpers ist der innenliegende Breitenbereich einer besonders hohen Beanspruchung ausgesetzt, weshalb die Öffnungen in Form einer Ellipse vorzugsweise in diesem Bereich angeordnet sind.

In einer weiteren vorteilhaften Weiterbildung der Erfindung ist vorgesehen, dass im außenliegenden Breitenbereich des Ringkörpers kreisförmige Öffnungen angeordnet sind. Im außenliegenden Breitenbereich des Ringkörpers sind die auftretenden Beanspruchungen geringer. Aus fertigungstechnischen Gründen ist es daher vorteilhaft, in diesem Bereich kreisförmige Öffnungen vorzusehen.

In einer weiteren vorteilhaften Weiterbildung der Erfindung ist vorgesehen, dass die Länge der Hauptachse der Öffnung in Form einer Ellipse zwischen 5 und 20 mm beträgt. Dieser Längenbereich ist im Hinblick auf eine möglichst geringe Festigkeitsreduzierung als optimal anzusehen.

In einer weiteren vorteilhaften Weiterbildung der Erfindung ist vorgesehen, dass das Verhältnis von Hauptachse zu Nebenachse der Öffnung in Form einer Ellipse zwischen 1,1 und 1,6 beträgt. Ein solches Ellipsenverhältnis lässt sich aus fertigungstechnischen Gründen einfach realisieren.

Anhand eines Ausführungsbeispiels soll die Erfindung näher erläutert werden. Es zeigen:
- Fig. 1: ein Fahrzeugrad mit erfindungsgemäßem Notlaufstützkörper als Radialschnitt,
- Fig. 2: eine Aufsicht eines Teilausschnittes der Platine, aus der der Ringkörper gefertigt wird und
- Fig. 3: eine Aufsicht auf eine Öffnung in Form einer Ellipse.

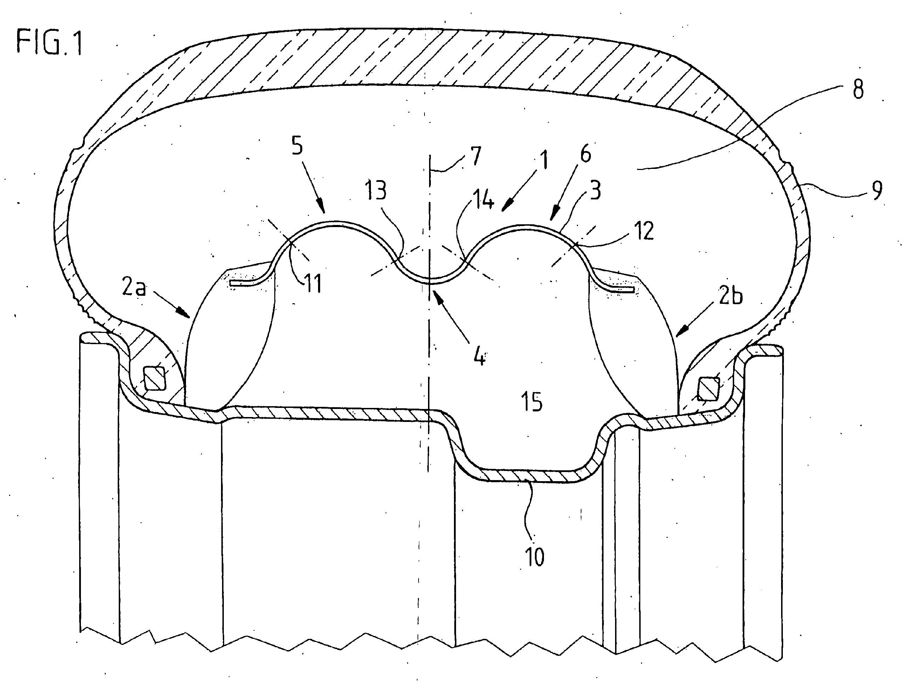

Figur 1 zeigt ein Fahrzeugrad mit erfindungsgemäßem Notlaufstützkörper 1 als Radialschnitt. Der Notlaufstützkörper 1, der rotationssymetrisch ist, ist im Reifenhohlraum 8 des Luftreifens 9 angeordnet und stützt sich über die beiden ringförmigen Stützelemente 2a und 2b auf einer herkömmlichen Fahrzeugfelge 10 ab. Der Notlaufstützkörper 1 besteht im Wesentlichen aus den beiden Stützelementen 2a und 2b sowie dem schalenförmigen Ringkörper 3. Die Öffnungen im Ringkörper befinden sich an den Positionen 11, 12, 13 und 14. An den Positionen 11 und 12 liegen hintereinander in Umfangsrichtung des Ringkörpers jeweils kreisförmige Öffnungen im außenliegenden Breitenbereich des Ringkörpers 3. Im Bereich der radialen Einschnürung 4 sind auf den Umfang des Ringkörpers verteilt jeweils Öffnungen in Form von Ellipsen in den Positionen 13 und 14 angeordnet. Die Positionen 13 und 14 sind im innenliegenden Breitenbereich angeordnet. Die Öffnungen ermöglichen einen optimalen und schnellen Luftaustausch zwischen dem Reifenhohlraum 8 und dem Hohlraum 15 des Notlaufstützkörpers.

Die Öffnungen in Form von Ellipsen besitzen den Vorteil, dass die Festigkeit des Ringkörpers für den Pannenfall nicht wesentlich reduziert wird. Im Pannenfall stützt sich der Luftreifen direkt auf den Notlaufstützkörper ab, wodurch eine hohe mechanische Beanspruchung des Ringkörpers erfolgt. An den Öffnungen im Ringkörper könnten durch die Druckbeanspruchung Spannungsspitzen auftreten, die zunächst zu kleinen Rissen und schließlich zur Zerstörung des Notlaufstützkörpers führen. Die Öffnungen in Form von Ellipsen besitzen den entscheidenden Vorteil, dass der Notlaufstützkörper mit diesen Öffnungen im Pannenfall eine höhere Last aufnehmen kann als das bei gewöhnlichen kreisförmigen Öffnungen der Fall ist.

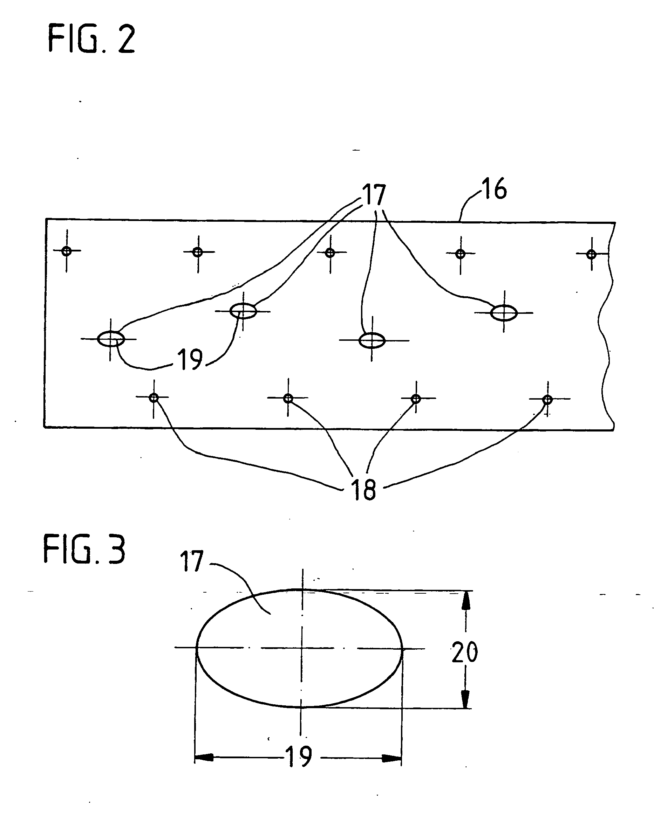

Fig. 2 zeigt eine Aufsicht eines Teilausschnittes der Platine, aus der der Ringkörper gefertigt wird. Die dargestellte Platine 16 wird bei der Herstellung des Ringkörpers 3 zunächst mit den Öffnungen 17 und 18 versehen. Die Öffnungen 17 besitzen in der Aufsicht die Form von Ellipsen. Im außenliegenden Breitenbereich der Platine 16 sind kreisförmige Öffnungen 18 mit einem Durchmesser von etwa 5 mm vorgesehen. Es ist denkbar, die Öffnungen 18 ebenfalls in Form von Ellipsen auszuführen, wobei im Hinblick auf eine möglichst einfache Fertigung in diesem Breitenbereich kreisrunde Öffnungen ausreichend sind. Statt der Öffnungen in Form von Ellipsen sind ebenfalls Öffnungen in Form von Langlöchern denkbar. Alle Öffnungen werden mit einem Laserschneidverfahren erzeugt. Anschließend wird die metallische Platine 16 zu einem offenen Ring gebogen und sodann an den freien Enden verschweißt. Mit einem herkömmlichen Roll-Drück-Verfahren wird die Platine 16 dann so umgeformt, dass sie die in Fig. 1 dargestellte Ringkörperform mit den zwei Wölbungen erhält.

Fig. 3 zeigt eine Aufsicht auf eine Öffnung in Form einer Ellipse 17 mit der entsprechenden Hauptachse 19 und Nebenachse 20.

### Bezugszeichenliste

### (ist Teil der Beschreibung)

- 1: Notlaufstützkörper
- 2a,2b: Stützelemente
- 3: Ringkörper
- 4: radiale Einschnürung des Ringkörpers
- 5,6: nach radial außen gekrümmte Wölbungen des Ringkörpers
- 7: axiale Mittelachse
- 8: Reifenhohlraum
- 9: Luftreifen
- 10: Fahrzeugfelge
- 11: Position der Öffnungen im linken Bereich des Ringkörpers
- 12: Position der Öffnungen im rechten Bereich des Ringkörpers
- 13,14: Position der Öffnungen im mittleren Bereich des Ringkörpers
- 15: Hohlraum des Notlaufstützkörpers
- 16: Platine
- 17: Öffnungen in Form von Ellipsen
- 18: kreisförmige Öffnungen
- 19: Hauptachse
- 20: Nebenachse

## Patentansprüche

1. Fahrzeugrad mit einem auf einer Radfelge (10) befestigten Luftreifen (8) und einem Notlaufstützkörper (1), der als schalenförmiger Ringkörper (3) ausgebildet ist und sich mit seinen beiden axial äußeren Randbereichen (4,5) über ringförmige Stützelemente (2a,2b) auf der Radfelge (10) abstützt,
**dadurch gekennzeichnet, dass**
der Ringkörper (3) Öffnungen in Form einer Ellipse (17) aufweist,
wobei die Öffnungen in Form einer Ellipse (17) im innenliegenden Breitenbereich des Ringkörpers (3) angeordnet sind.

2. Fahrzeugrad nach Anspruch 1,
**dadurch gekennzeichnet, dass**
die Hauptachsen (19) der Öffnungen in Form einer Ellipse (17) im Wesentlichen in Umfangsrichtung des Notlaufstützkörpers (1) ausgerichtet sind.

3. Fahrzeugrad nach Anspruch 1 oder 2,
**dadurch gekennzeichnet, dass**
im außenliegenden Breitenbereich des Ringkörpers (3) kreisförmige Öffnungen (18) angeordnet sind.

4. Fahrzeugrad nach einem der Ansprüche 1 bis 3,
**dadurch gekennzeichnet, dass**
die Länge der Hauptachse (19) der Öffnung in Form einer Ellipse (17) zwischen 5 und 20 mm beträgt.

5. Fahrzeugrad nach einem der Ansprüche 1 bis 4,
**dadurch gekennzeichnet, dass**
das Verhältnis von Hauptachse (19) zu Nebenachse (20) der Öffnung in Form einer Ellipse (17) zwischen 1,1 und 1,6 beträgt.

## Claims

1. Vehicle wheel comprising a tyre (8), fastened on a wheel rim (10), and a run-flat support body (1), which is configured as a shell-shaped annular body (3) and is supported on the wheel rim (10), with its two axially outer marginal regions (4, 5), by means of annular supporting elements (2a, 2b), **characterized in that** the annular body (3) has elliptical openings (17), the elliptical openings (17) being disposed in the inner latitudinal region of the annular body (3).

2. Vehicle wheel according to Claim 1, **characterized in that** the principal axes (19) of the elliptical openings (17) are aligned substantially in the peripheral direction of the run-flat support body (1) .

3. Vehicle wheel according to Claim 1 or 2, **characterized in that** in the outer latitudinal region of the annular body (3) circular openings (18) are disposed.

4. Vehicle wheel according to one of Claims 1 to 3, **characterized in that** the length of the principal axis (19) of the elliptical opening (17) is between 5 and 20 mm.

5. Vehicle wheel according to one of Claims 1 to 4, **characterized in that** the ratio of the principal axis (19) to secondary axis (20) of the elliptical opening (17) is between 1.1 and 1.6.

## Revendications

1. Roue de véhicule comportant un bandage pneumatique (8) fixé sur une jante de roue (10) et un corps d'appui pour roulage à plat (1), qui est réalisé sous la forme d'un corps annulaire en forme de coque (3) et qui s'appuie sur la jante de roue (10) avec ses deux régions de bord axialement extérieures (4, 5) par le biais d'éléments d'appui (2a, 2b) de forme annulaire,
**caractérisée en ce que**
le corps annulaire (3) présente des ouvertures en forme d'ellipse (17), les ouvertures en forme d'ellipse (17) étant disposées dans la région de la largeur intérieure du corps annulaire (3).

2. Roue de véhicule selon la revendication 1,
**caractérisée en ce que**
les axes principaux (19) des ouvertures en forme d'ellipse (17) sont orientés sensiblement dans la direction périphérique du corps d'appui pour roulage à plat (1).

3. Roue de véhicule selon la revendication 1 ou 2,
**caractérisée en ce que**
des ouvertures de forme circulaire (18) sont disposées dans la région de la largeur extérieure du corps annulaire (3).

4. Roue de véhicule selon l'une quelconque des revendications 1 à 3,
**caractérisée en ce que**
la longueur de l'axe principal (19) de l'ouverture en forme d'ellipse (17) est comprise entre 5 et 20 mm.

5. Roue de véhicule selon l'une quelconque des revendications 1 à 4,
**caractérisée en ce que**
le rapport de l'axe principal (19) à l'axe secondaire (20) de l'ouverture en forme d'ellipse (17) est compris entre 1,1 et 1,6.
